# EUROPEAN PATENT APPLICATION

(11) **EP 3 736 811 A1**
(43) Date of publication of application: **11.11.2020**
(21) Application number: 20170602.5
(22) Date of filing: 21.04.2020
(51) Int. Cl.: G11C 5/04, G11C 7/24, G11C 16/22, G11C 29/52, H01L 21/66, G01R 31/317, G06K 19/073

(54) **SEMICONDUCTOR DEVICE WITH SECURITY FEATURES**

(30) Priority: 30.04.2019 US 201916398508
(71) Applicant: NXP B.V., 5656 AG Eindhoven (NL)
(72) Inventor: HANSON, Harold Garth, Redhill, Surrey RH1 1QZ (GB); DELSHADPOUR, Siamak, Redhill, Surrey RH1 1QZ (GB); WHITE, Adam Jerome, Redhill, Surrey RH1 1QZ (GB); DANIEL, Steven, Redhill, Surrey RH1 1QZ (GB)
(74) Representative: Hardingham, Christopher Mark

(57) **Abstract**

A chip includes a metal layer, a portion of a first sawbow line, and a portion of a second sawbow line. The portion of the first sawbow line and the portion of the second sawbow line respectively correspond to the first sawbow line and the second sawbow line in a cut state. The portions of the first and second sawbow lines may be on different layers, and the metal layer may be arranged over the portion of the first sawbow line and/or the portion of the second sawbow line to hide at least one of the portions of the sawbow lines in the cut state.

## Description

### TECHNICAL FIELD

Example embodiments disclosed herein relate generally to a semiconductor device.

### BACKGROUND

Semiconductor chips are used in most electronic devices today. The chips may perform a variety of signal processing and data storage functions. Examples of chips which perform data storage functions include one-time programmable (OTP) and multi-time programmable non-volatile memory.

A number of processes are performed to ensure the quality of the chips before they are sold to customers. Some processes involve programming and testing to ensure proper operation. Programming is usually performed while the die of the chip is still part of the wafer. Testing may also be performed while the die is in this state and, for example, may include scan tests and various types of functional tests. Once the dies are programmed and tested, the wafer may be cut to form the finished products.

A chip with memory may include various pins, conductive lines, or other features that are used for testing and programming during manufacture. These features may be exploited by hackers seeking unauthorized access to data stored in the chip. One hacking technique involves locating sawbow lines created when a wafer is cut. Once the sawbow lines are located on a cut die, one or more of the aforementioned features of the die may be located and used to access the stored data.

Attempts have been made to prevent memory chips and other types of semiconductor devices from being hacked. However, these attempts have proven inadequate.

### SUMMARY

A brief summary of various example embodiments is presented below. Some simplifications and omissions may be made in the following summary, which is intended to highlight and introduce some aspects of the various example embodiments, but not to limit the scope of the invention. Detailed descriptions of example embodiments adequate to allow those of ordinary skill in the art to make and use the inventive concepts will follow in later sections.

In accordance with one or more embodiments, a chip includes a metal layer, a portion of a first sawbow line, and a portion of a second sawbow line, wherein the portion of the first sawbow line and the portion of the second sawbow line respectively correspond to the first sawbow line and the second sawbow line in a cut state and wherein the portion of the first sawbow line and the portion of the second sawbow line are on different layers, the metal layer arranged over at least one of the portion of the first sawbow line and the portion of the second sawbow line to hide the at least one of the portion of the first sawbow line and the portion of the second sawbow line in the cut state. The first sawbow line and the second sawbow line may be coupled to another chip when in an uncut state.

The chip may include a supporting circuit coupled to the portion of the first sawbow line and the portion of the second sawbow line. The portion of the first sawbow line may be configured to carry a first signal from the supporting circuit to the other chip when the first sawbow line is in the uncut state; and the portion of the second sawbow line may be configured to carry a second signal from the other chip to the supporting circuit when the second sawbow line is in the uncut state. The supporting circuit may be configured to determine a state of at least one of the chip or the other chip based on the second signal.

The supporting circuit may be configured to disable a predetermined mode of operation of the chip based on the second signal. The predetermined mode of operation may be a test mode to be performed during factory testing of the wafer. The first sawbow line and the second sawbow line may be arranged in a predetermined pattern between inputs/outputs of the chip and the other chip when in the uncut state. The first sawbow line and the second sawbow line may be configured to extend in different directions in the predetermined pattern when in the uncut state. The first sawbow line and the sawbow line may cross one another when in the uncut state. The chip may include a portion of a ground line in a cut state, wherein the portion of the ground line is configured to be coupled to another chip when the ground line is in an uncut state.

In accordance with one or more embodiments, a chip includes a circuit, a portion of a first sawbow line coupled to the circuit, and a portion of a second sawbow line coupled to the circuit, wherein the portion of the first sawbow line and the portion of the second sawbow line respectively correspond to the first sawbow line and the second sawbow line in a cut state and wherein the circuit is configured to generate a signal to disable a predetermined mode of operation of the chip based on a signal carried on at least one of the first sawbow line and the second sawbow line when in an uncut state. The predetermined mode of operation may be a test mode to be performed during factory testing or manufacture of the wafer.

The first sawbow line and the second sawbow line may connect the circuit to another chip when the first sawbow line and the second sawbow line are in the uncut state. The portion of the first sawbow line and the portion of the second sawbow line are on different layers. The chip may include a metal layer, wherein the metal layer is over at least one of the portion of the first sawbow line and the portion of the second sawbow line to hide the at least one of the portion of the first sawbow line and the portion of the second sawbow line in the cut state. The chip may include a portion of a ground line, wherein portion of the ground line corresponds to the ground line in a cut state. The first sawbow line may cross the second sawbow line when in the uncut state.

### BRIEF DESCRIPTION OF THE DRAWINGS

Additional objects and features of the invention will be more readily apparent from the following detailed description and appended claims when taken in conjunction with the drawings. Although several example embodiments are illustrated and described, like reference numerals identify like parts in each of the figures, in which:
FIG. 1 illustrates an embodiment of a wafer including sawbow lines;
FIG. 2 illustrates an embodiment of a supporting circuit on a die;
FIG. 3A illustrates an embodiment of metal layers for the sawbow lines;
FIG. 3B illustrates a top view of some of the sawbow lines on the metal layers;
FIG. 4 illustrates an embodiment of supporting circuits on dies of the wafer;
FIG. 5 illustrates an embodiment of supporting circuits on dies of the wafer;
FIG. 6 illustrates an embodiment of supporting circuits on dies of the wafer;
FIG. 7 illustrates an embodiment of supporting circuits on dies of the wafer; and
FIG. 8 illustrates a pattern of sawbow lines extending between adjacent dies.

### DETAILED DESCRIPTION

It should be understood that the figures are merely schematic and are not drawn to scale. The same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various example embodiments described herein are not necessarily mutually exclusive, as some example embodiments can be combined with one or more other example embodiments to form new example embodiments. Descriptors such as "first," "second," "third," etc., are not meant to limit the order of elements discussed, are used to distinguish one element from the next, and are generally interchangeable. Values such as maximum or minimum may be predetermined and set to different values based on the application.

Example embodiments describe a method for concealing or disabling features that may be used, for example, to test and/or program a semiconductor device during manufacture. The features may be included on or coupled to a semiconductor die to be cut from a wafer. If not for the embodiments described herein, these features may be detected after the wafer is cut and sold and used as a basis for compromising the security of the host chip.

In one embodiment, the features to be concealed or disabled relate to sawbow lines of the die. Because many hacking techniques involve locating sawbow lines as an initial step, concealing the sawbow lines (or otherwise making them very hard to find) will serve as a strong deterrent to hacking. According to one implementation, the sawbow lines on the die may be arranged to be hidden by one or more metal layers. For example, sawbow lines may formed on one or more different metal layers to prevent detection. In these or other embodiments, the sawbow lines may be arranged in a random manner or a predetermined pattern to provide concealment. In these or other embodiments, the die circuits used to perform a test mode or programming mode during manufacture may be disabled as an additional security measure against hackers. By taking one or more of these security measures, hackers will be unable to locate the sawbow lines and thus unable to gain access to information stored in the circuits of the die. The information may include various forms of data and/or key or other encryption material.

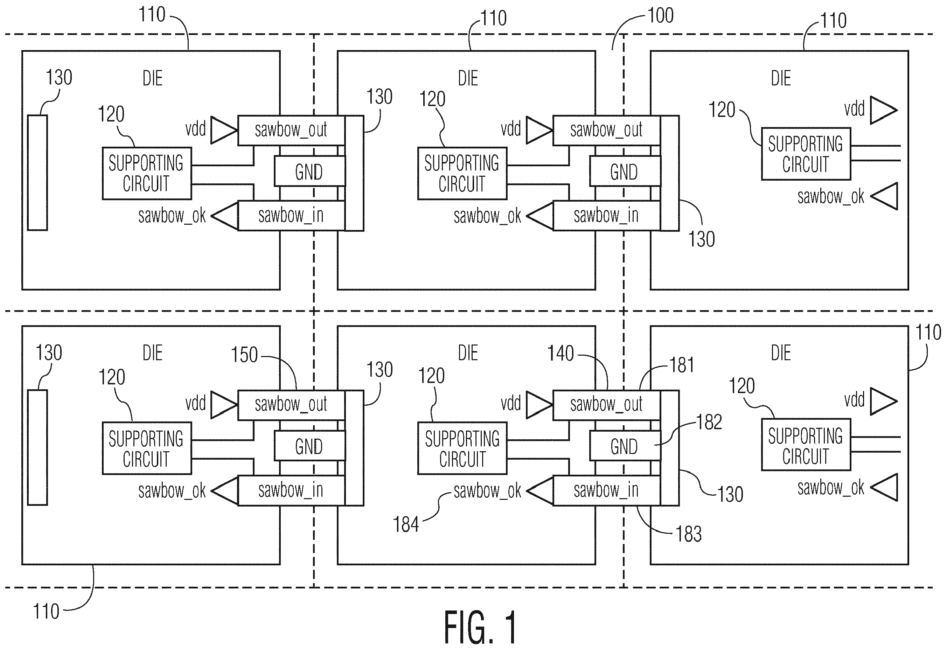

FIG. 1 illustrates an embodiment of an uncut wafer 100 including a plurality of semiconductor dies 110. The dies may include memory, processing, and/or other types of circuits and are also equipped with supporting circuits for determining proper operation prior to delivery. The supporting circuits may be used, for example, during factory test mode, program mode, and/or another mode of operation prior to the wafer being cut (or diced) into individual dies. Once cut, the dies may be incorporated into packages to form integrated circuits chips to be sold to customers.

Each die 110 includes a number of supporting circuits coupled to one or more groups of signal lines. In the present embodiment, each die includes a first supporting circuit 120 and a second supporting circuit 130. The first supporting circuit 120 is coupled to a first group 140 of signal lines and the second supporting circuit is coupled to a second group 150 of signal lines.

The first and second groups of signals lines may be arranged at opposing sides of each die. Thus, each group of signal lines connects the first supporting circuit in one die to the second supporting circuit in an adjacent die. The first and second supporting circuits exchange signals to test operation of the die in the uncut wafer, e.g., while the wafer is still intact. Arranging the signal lines at respective sides of each die may allow PCM and OCM structures to be placed at flexible locations within a reticle used during semiconductor chip fabrication. As explained in greater detail below, the supporting circuits may generate signals to disable one or more modes of operation (e.g., test mode, programming mode, etc.) after the wafer has been cut. Disabling these modes may serve as one of a plurality of measures that may be taken to protect the security of the die, including any information stored therein.

Because the signal lines are used for testing and/or programming the circuits on the dies and will but cut during wafer dicing, the signal lines may be referred to as sawbow lines. The sawbow lines in each group of signal lines may include a sawbow_out line 181, ground (or other reference potential) line 182, and a sawbow_in line 183. The first and second supporting circuits on respective adjacent dies may share the ground line 182. Also, each die may use a power supply Vdd on an adjacent die for testing. This arrangement may significantly reduce the ability of a hacker to gain unauthorized access to information stored on the dies

In operation, the first supporting circuit 120 on each die outputs a signal (e.g., test mode and/or programming signals) to the second supporting circuit 130 on an adjacent die on the sawbow_out line 181. In one case, the signal may correspond to or be based on a power supply Vdd voltage. In another case, the signal may be an encoded or other type of signal. The second supporting circuit 130 processes and/or passes the signal and outputs it to the first supporting circuit 120 on the sawbow_in line 183, where it is used as a basis for determining proper operation of one or both of the dies. In one embodiment, the second supporting circuit 130 may generate coded data based on the signal received from the sawbow_out line 181. Also, in one case, the first and second supporting circuits may have a master-slave relationship.

The first supporting circuit 120 may generate one or more control signals based on the signal received on the sawbow_in line 183. An example of such a control signal is a sawbow_ok indicating the state of the die, e.g., whether the die is intact within the wafer or whether the die has been cut from the wafer. When the die has been cut, the sawbow_ok signal may disable operation of one or more the circuits on the die, e.g., may disable the die circuits from entering a test mode and/or program mode. The sawbow_ok signal may therefore constitute another feature for protecting the security of the die.

The ground line 182 may be located between the sawbow_out line 181 and sawbow_in line 183. After the wafer is cut, the cut ends of the sawbow lines 181 and 183 may be connected to the ground line 182, e.g,. by soldering these lines (or their corresponding package pins to a pin connected) to the ground line 182. The ground line 182 may therefore provide an additional security feature for each of the dies in the finished product. In another embodiment, soldering may be omitted.

The sawbow lines may include electrostatic discharge (ESD) protection features. In one embodiment, one or more of the sawbow lines may include ESD protection features at respective ends. The ESD protection features may include, for example, one or more metal layers or conductive connections that connect a sawbow line to a reference potential, e.g., ground. In one case, the at least one metal layer or conductive connection may be coupled to the ground line 182, in order to discharge any static electricity that might damage the circuits on the die, at least while the wafer 100 is intact.

Once testing is completed, the sawbow lines may be cut in preparation for delivery to a customer. To allow retesting and/or to handle customer returns, integrated circuit including the cut dies may be set to an ERROR mode if its sawbow line(s) is/are repaired. In this case, it may be possible to get back to an INITIAL mode of operation, but all key material may be invalidated in this case.

In one embodiment, the sawbow lines may include physical fuses. In this case, a determination may be made as to whether the die/integrated circuit is in the factory or whether it has been distributed to a customer simply by determining whether the sawbow are in tact or in a cut state. This may allow the die (or its integrated circuit) to be locked or unlocked. The die may be locked, for example, when storing key or another type of encryption material. Also, in one embodiment, when the sawbow lines are in tact, the die may be blanked and returned to a new state. However, once the sawbow lines are cut, the die may no longer be blanked and returned to a new state.

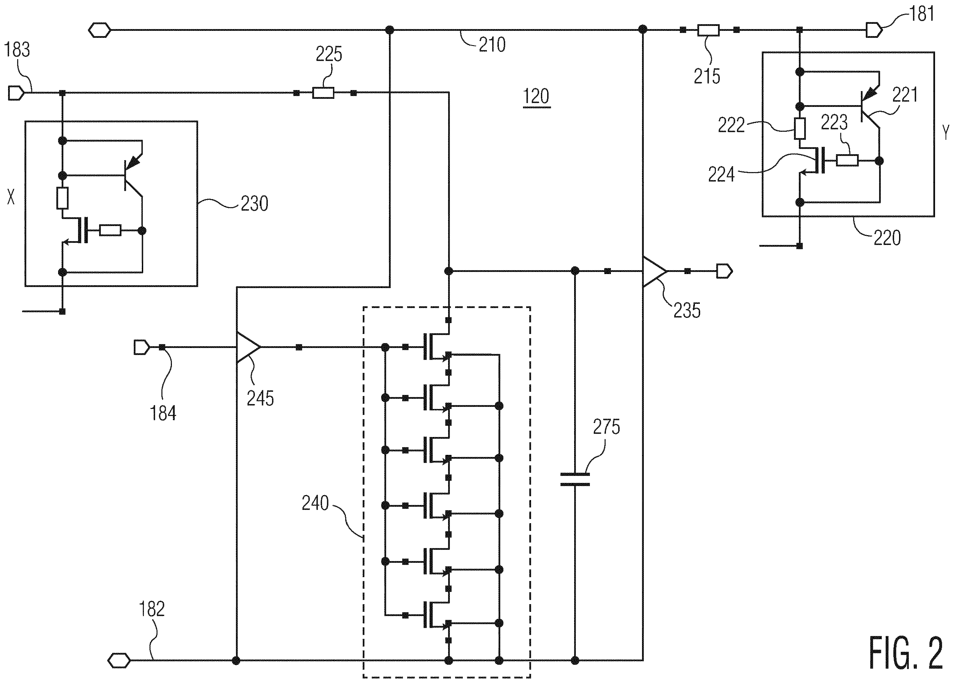

FIG. 2 illustrates an embodiment of the first supporting circuit 120 on each die. The first supporting circuit 120 includes a power supply rail Vdd 210, a first clamping circuit 220 coupled to the sawbow_out line 181, a second clamping circuit 230 coupled to the sawbow_in line 183, and a transistor circuit 240 coupled between the ground line 182 and an enable sawbow line 184.

In operation, the power supply rail 210 outputs a predetermined supply voltage Vdd that may be used as a basis for generating the test signal on the sawbow_out line 181. In the example of FIG. 2, the test signal on the sawbow_out line 181 corresponds to the supply voltage Vdd dropped by the value of resistor 215. The value of resistor 215 may correspond to a level sufficient to perform the test or other processing performed by the second supporting circuit 130 in the adjacent die. In the present embodiment, resistor 215 may have a value of 1K Ω.

If the test is successful (e.g., if the adjacent die is operating properly), this will be indicated by the signal returned on the sawbow_in line 183 as detected by first supporting circuit 120. The signal on the sawbow_in line 183 may be used as a basis for generating the sawbow_ok signal. In one embodiment, the sawbow_ok signal is a digital signal having a first logical value (e.g., 1) indicating that the sawbow lines (and the wafer) are intact or a second logical value (e.g., 0) indicating that the sawbow lines (and the wafer) have been cut.

The signal received on the sawbow_in line 183 may be passed through a resistor 225 and then to a control circuit 235 in generating the sawbow_ok signal. The control circuit 235 may have a first terminal coupled to the power supply rail Vdd and a second terminal coupled to the ground line 182. If the input into the control circuit 235 (which is based on the signal on sawbow_in line 183) is in a first range (e.g., above a threshold), the control circuit 235 outputs the sawbow_ok signal to have the first logical value. If the input into the control circuit 235 is in a second range (e.g., below a threshold), the control ciruit 235 outputs the sawbow_ok signal to have the second logical value. Thus, the sawbow_ok signal serves as a security feature that ensures that the test or programming mode of the die is operative only if the sawbow lines are intact, e.g., have not be cut.

The first supporting circuit 210 may also receive an en_sawbow signal 184. This signal may be input into a control circuit 245 having a first terminal coupled to the power supply rail Vdd and a second terminal coupled to the ground line 182. The en_sawbow signal 184 is coupled to transistor circuit 240. An example of the operation of this circuit will now be described.

When the sawbow lines (and wafer) are intact, the sawbow_ok signal is a logical 1 and the sawbow_in signal is pulled high by the supply voltage coupled to the sawbow_out line through a resistor. The signal output on the sawbow_out line passes through the second supporting circuit of the adjacent die and is returned as the sawbow_in signal, which has a logical 1 value. In addition, when the en_sawbow signal is a logical 1, the control circuit 245 outputs the same to transistor circuit 240. In one embodiment, the transistor circuit 240 may include a sequential chain of NMOS transistors with gates coupled to receive a signal based on signal en_sawbow signal 184. Thus, when en_sawbow is a logical 1, all the transistors in circuit 240 are enabled and pulled high through the resistor. This may add, for example, about 2µA.

When the en_sawbow signal has a logical 0 value, the NMOS transistors in transistor circuit 240 are turned off and this circuit is disabled. This may make the sawbow_ok signal equal to sawbow_in signal.

When the sawbow lines (and wafer) are cut, the sawbow_ok signal is a logical 0. Also, if the en_sawbow signal is a logical 1, the pulldown arrangement of transistors in transistor circuit 240 are turned on and circuit 240 is enabled. In addition, the sawbow_in signal is actively pulled low. In one embodiment, if the en_sawbow signal is a logical 0, the transistor circuit 240 may be in a floating state, in which case sawbow_in may be held at a logical low level for a short period of time by capacitor 275. When the en_sawbow signal equals 0, all of the (NMOS) transistors are off and thus is equal to an open circuit. When the en_sawbow signal is equal to logical 1, all of the (NMOS) transistors are on and thus operates as a pull-down resistor to ground.

The first clamping circuit 220 may operate as an ESD protection circuit. In the example of FIG. 2, the first clamping circuit 220 includes a bipolar transistor 221, a first resistor 222, and second resistor 223, and a MOSFET (e.g., NMOS) transistor 224. The base and collector of the bipolar transistor 221 are connected to one another to effectively form a diode. When ESD occurs on the power supply rail or the sawbow_out line, the excessive voltage of the ESD forward biases the diode formed by bipolar transistor 221. As a result, transistor 221 outputs a logical 1 value to the gate of transistor 224, which turns this transistor on to couple the sawbow_out line to ground. The second clamping circuit 230 is similar in structure to the first clamping circuit 220, except that it clamps the sawbow_in line to ground when an ESD occurs on this line.

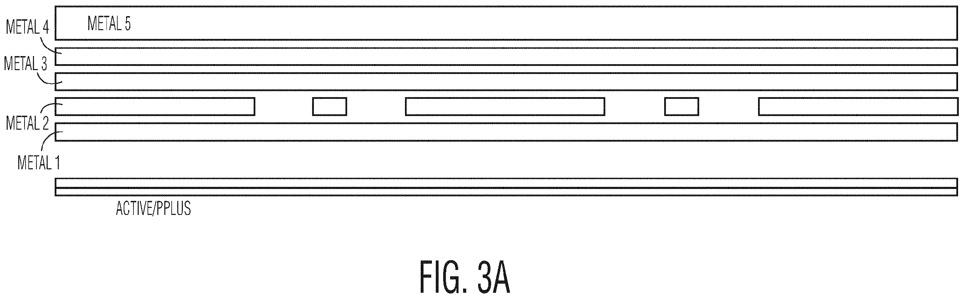

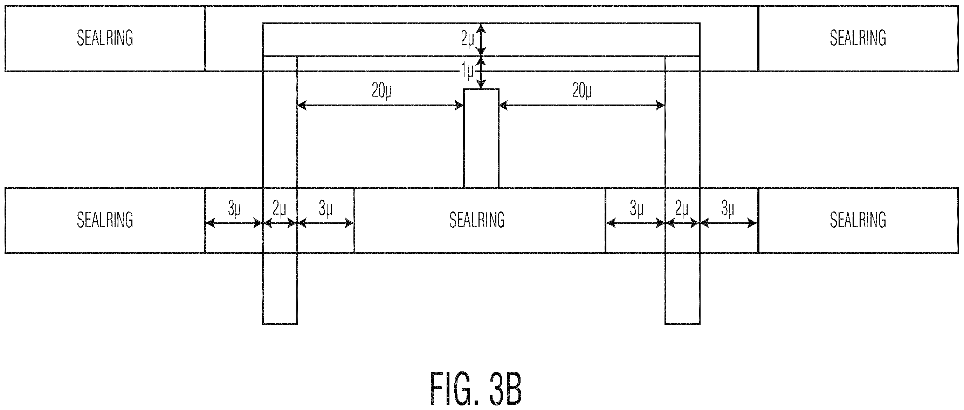

FIG. 3A illustrates an embodiment of a plurality of metal layers that may be included in each of the dies 110 in FIG. 1 prior to cutting. The metal layers are illustrated in cross-section, and in one embodiment may extend across an area between adjacent dies in order to allow operations in the factory test mode and/or programming mode to be performed. In this example, five metal layers are included: Metal 1, Metal 2, Metal 3, Metal 4, and Metal 5. All the metal layers extend in a first direction, except for Metal 2 which extends in a second direction crossing (e.g., perpendicular to) the first direction, as illustrated in FIG. 3B. While FIG. 3A illustrates an example with five metal layers, a different number of layers (e.g., more or less than five layers) may be provided in another embodiment.

The sawbow lines may be arranged in a random order or predetermined pattern in different ones of the metal layers. In one embodiment, all of the sawbow lines may be on different metal layers. In another embodiment, two or more of the sawbow lines may be on a same layer, but other overlying metal layers may still hide them. In one embodiment, one or more of the metal layers do not include any sawbow lines. In all of these cases, at least one of the metal layers may hide all or a portion of one or more sawbow lines on an underlying metal layer.

In one embodiment, the sawbow line in a first die, adjacent to a second die, may be on a first one of the metal layers and the same sawbow line may be on a second one of the metal layers in the second die 20. This may be accomplished, for example, by connecting the first metal layer to the second metal layer using a plug in a via in the five metal-layer structure. Dispersing at least some of the sawbow lines in this manner may make detection of the sawbow lines more difficult after they are cut, thereby adding an additional security measure against hacking.

FIG. 3B illustrates a top view of the metal layers depicted in FIG. 3A. In FIG. 3B, the wafer includes a seal ring surrounding an area including or adjacent to the semiconductor dies 110. In this case, the ESD protection may allow at least one (and in some cases only one) metal layer of a plurality of metal layers, and one or more vias connecting the metal layers, to be removed from the seal ring, due to less ESD influence. In one embodiment, the seal ring may extend into the gaps of Metal 2 (as illustrated in FIG. 3A) in order to avoid the formation of vias in this layer.

The intact and cut states of a wafer may affect the current consumption in each of the dies operating in test or programming mode. The table below provides examples of current consumption values for both intact and cut states.

| Sawbow State | en_sawbow | sawbow_ok | Idd | Notes |
|---|---|---|---|---|
| Intact | 0 | 1 | 0 | Disables Pulldown, so Reduces Idd |
| Intact | 1 | 1 | αµA | α is a non-zero number |
| Cut | 0 | X | 0 | Floating State. Redundant State. No Need to Disable Pulldown if Sawbow Lines are Cut |
| Cut | 1 | 0 | 0 | Normal Operation |

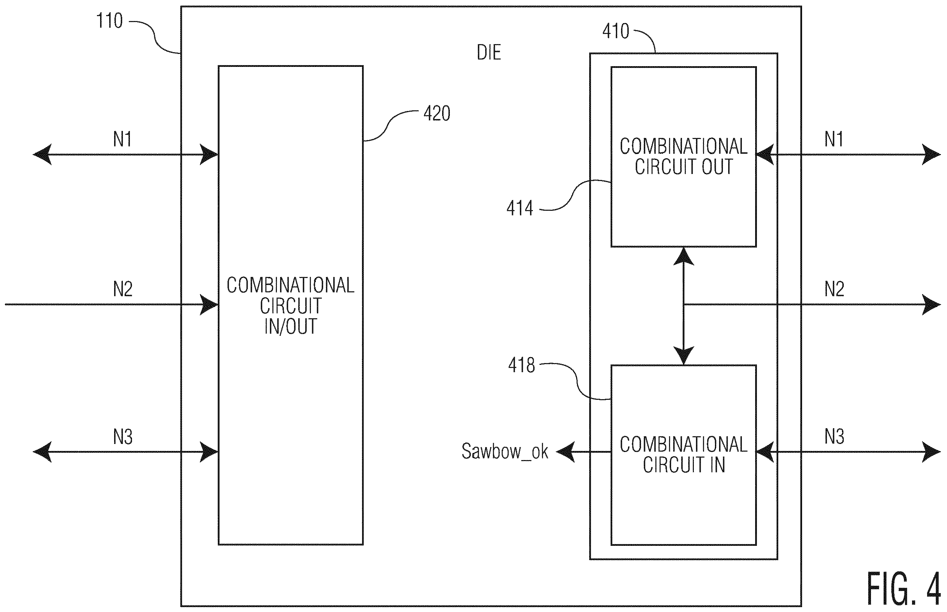

FIG. 4 illustrates an embodiment of one of the semiconductor dies 110 in FIG. 1. In this embodiment, the semiconductor die includes a first supporting circuit 410 and a second supporting circuit 420. The first supporting circuit 410 includes a combinational output circuit 414 and a combinational input circuit 418. These combinational circuits may include one or more logic gates to generate the sawbow_ok signal, the sawbow_out signal, and the sawbow_in signal in accordance with the embodiments described herein. For example, in FIG. 4, signals N1 may correspond to one or more sawbow_out signals which is sent to an adjacent die on the right side. Signals N3 may correspond to one or more sawbow_in signals received from a combinational input/output circuit on the adjacent die to the right. The second supporting circuit 420 may include a same type of combinational input/output circuit, which receives the sawbow_out signal, processes or passes the sawbow_out signal, and then sends it back to an adjacent die on the left. N2 may correspond to one or more ground lines commonly connected to the combination in circuit and combinational out circuit of the first supporting circuit and the combinational input/output circuit on the adjacent die to the right. Thus, in accordance with one embodiment, each ofN1, N2, and N3 may include only one signal or each of N1, N2, and/or N3 may include a plurality of signals. Also, in one embodiment, each ofN1, N2, and N3 may be sets of logical 0s and logical Is. For example, N1 may equal a first set of values, N2 may equal a second set of values, and N3 may equal a third set of values. These sets may be expressed as N1 → (a1, a2, a3, a4, a5), N2 → (b1, b2, b3, b4), and N3 → (c1, c2, c3, c4, c5, c6), where each of ai (i = 1, ..., 5), bi (i = 1, ..., 4) and ci (i = 1, ..., 6) may be ground or logical 0 or logical 1 values.

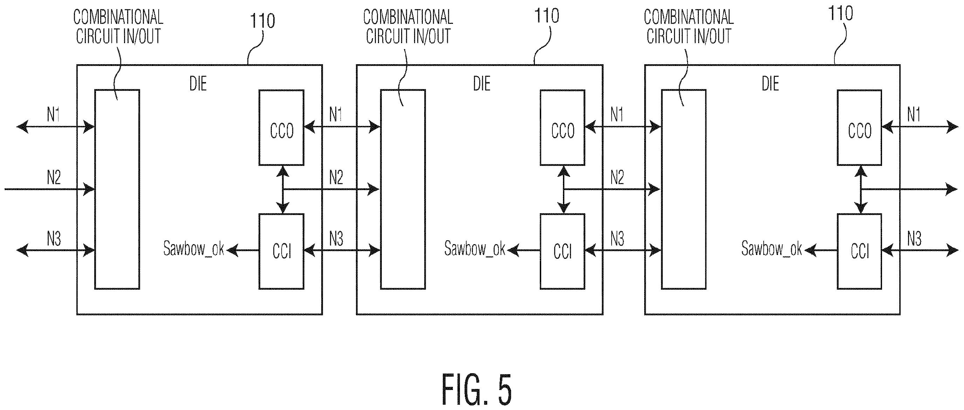

FIG. 5 illustrates three semiconductor dies including the first and second supporting circuits of FIG. 4 and the manner in which the dies and supporting circuits are connected. As in FIG. 4, the dies are shown on an uncut wafer with the sawbow lines intact. In this embodiment, CCO is the combinational circuit output and CCI is the combination circuit input.

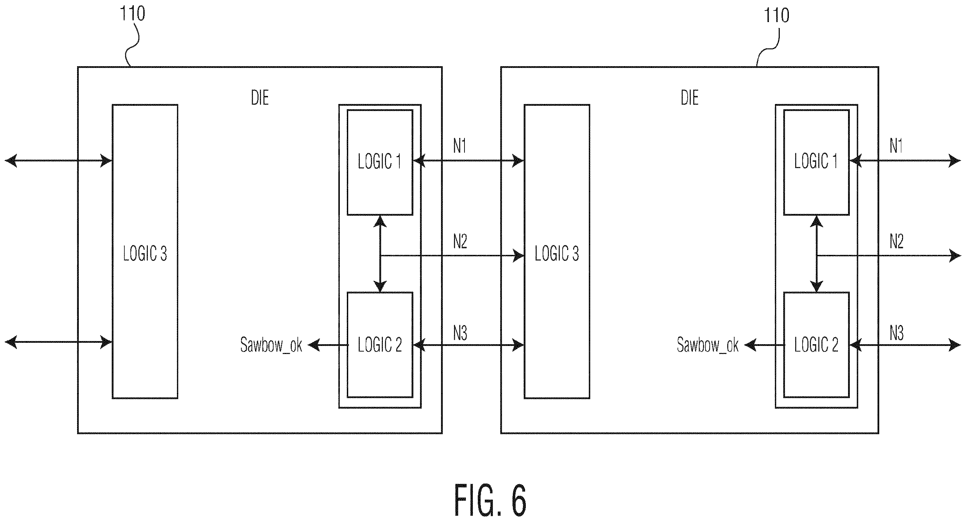

FIG. 6 illustrates an example of different logic circuits which may correspond to the supporting circuits in the embodiments of FIGS. 4 and 5. In one embodiment, each of the logic circuits may combine Ni coming logical 0/1 signals with simple or complex functionalities. For example, each logic circuit may count the number of logical Is and/or logical 0s or combine them.

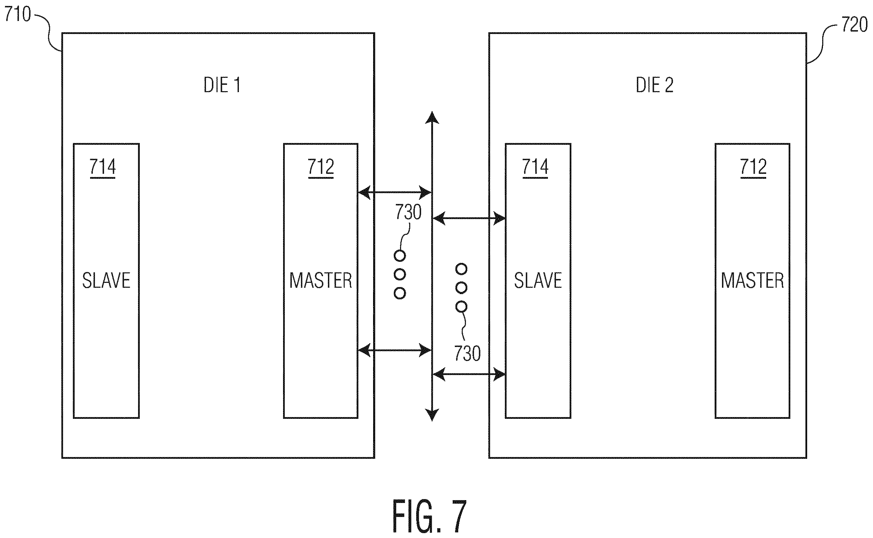

FIG. 7 illustrates another embodiment of a wafer including a first semiconductor die 710 adjacent to a second semiconductor die 720, which, for example, may correspond to any pair of adjacent dies in FIG. 1 with connected sawbow lines. In FIG. 7, the first die 710 includes a master circuit 712 and a slave circuit 714. The master and slave circuits may be coupled to a plurality of sawbow lines 730 for purposes of sending and receiving test and/or program signals prior to the wafer being cut. In one embodiment, the sawbow lines 730 may be connected inputs/outputs of dies 710 and 720 in one-to-one correspondence. In another embodiment, the sawbow lines 730 may connect different inputs/outputs of the dies, for example, in a random, offset or staggered pattern.

Arranging the sawbow lines 730 in this manner may constitute an additional security feature of the dies. For example, when the sawbow lines cross one another in a random, offset, or staggered pattern, it is more difficult to locate or determine the correspondence of the sawbow lines after they are cut. Such an approach may prevent a hacker from gaining unauthorized access to information stored in the dies.

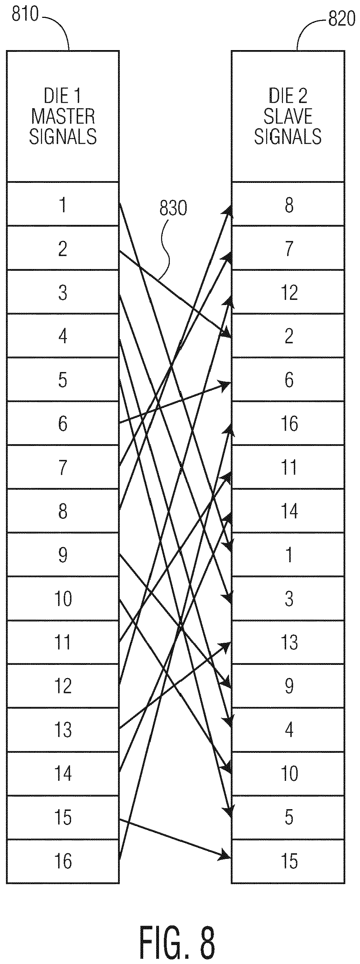

FIG. 8 illustrates an example of the pattern discussed above relative to FIG. 7. In FIG. 8, sixteen sawbow lines 830 extend between inputs/outputs of adjacent dies 810 and 820 for use during test mode and/or programming mode. The sawbow lines 830 may be assigned in a random or predetermined arrangement. For example, as illustrated in FIG. 8, the inputs/outputs of Die 1 are sequentially ordered (1, 2, 3, ..., 16) but the inputs/outputs of Die 2 are randomly assigned (e.g,. 8, 7, 12, 2, 6, ... ). This random assignment of an increased number of sawbow lines (which input and output master/slave signals, for example, in accordance with analog and/or digital supporting circuits on the dies) increases protection against hacking.

Moreover, the diagonal or crossing arrangement of these lines may add an extra measure or protection against hacking. For example, the diagonal arrangement of the sawbow lines may hide the inputs/outputs illustrated in FIG. 8 when the wafer and sawbow lines are cut. Additionally, or alternatively, many of the sawbow lines 830 may be included on different metal layers as another security feature against hacking.

In accordance with the embodiments described herein, the signals on or generated by the sawbow lines (e.g,. 0/1) may be very hard to detect when the lines are on different metal layers. Also, applying a zero or supply voltage to the supply and ground lines may have the effect of killing the die or otherwise rendering the die inoperable for purposes of test mode, but allows the other circuits on the die to be fully operational. For example, when the die includes a memory circuit, all the intended operations of the memory circuit are operational (for purposes of meeting customer needs), even thought the factory test mode of the die has been disabled.

The processors, logic circuits, controllers, and other signal processing or signal generating features of the embodiments disclosed herein may be implemented in logic which, for example, may include hardware, software, or both. When implemented at least partially in hardware, the processors, logic circuits, controllers, and other signal processing or signal generating features may be, for example, any one of a variety of integrated circuits including but not limited to an application-specific integrated circuit, a field-programmable gate array, a combination of logic gates, a system-on-chip, a microprocessor, or another type of processing or control circuit.

When implemented at least partially in software, the processors, logic circuits, controllers, and other signal processing or signal generating features may include, for example, a memory or other storage device for storing code or instructions to be executed, for example, by a computer, processor, microprocessor, controller, or other signal processing device. The computer, processor, microprocessor, controller, or other signal processing device may be those described herein or one in addition to the elements described herein. Because the algorithms that form the basis of the methods (or operations of the computer, processor, microprocessor, controller, or other signal processing device) are described in detail, the code or instructions for implementing the operations of the embodiments may transform the computer, processor, controller, or other signal processing device into a special-purpose processor for performing the methods described herein.

Although the various exemplary embodiments have been described in detail with particular reference to certain exemplary aspects thereof, it should be understood that the invention is capable of other example embodiments and its details are capable of modifications in various obvious respects. As is readily apparent to those skilled in the art, variations and modifications can be effected while remaining within the spirit and scope of the invention. Accordingly, the foregoing disclosure, description, and figures are for illustrative purposes only and do not in any way limit the invention, which is defined only by the claims.

## Claims

1. A chip, comprising:
a metal layer;
a portion of a first sawbow line; and
a portion of a second sawbow line, wherein the portion of the first sawbow line and the portion of the second sawbow line respectively correspond to the first sawbow line and the second sawbow line in a cut state and wherein the portion of the first sawbow line and the portion of the second sawbow line are on different layers, the metal layer arranged over at least one of the portion of the first sawbow line and the portion of the second sawbow line to hide the at least one of the portion of the first sawbow line and the portion of the second sawbow line in the cut state.

2. The chip of claim 1, wherein the first sawbow line and the second sawbow line are coupled to another chip when in an uncut state.

3. The chip of claim 1 or 2, further comprising:
a supporting circuit coupled to the portion of the first sawbow line and the portion of the second sawbow line.

4. The chip of claim 3, wherein:
the portion of the first sawbow line is configured to carry a first signal from the supporting circuit to the other chip when the first sawbow line is in the uncut state; and
the portion of the second sawbow line is configured to carry a second signal from the other chip to the supporting circuit when the second sawbow line is in the uncut state.

5. The chip of claim 4, wherein the supporting circuit is configured to determine a state of at least one of the chip or the other chip based on the second signal.

6. The chip of claim 4 or 5, wherein the supporting circuit is configured to disable a predetermined mode of operation of the chip based on the second signal.

7. The chip of claim 6, wherein the predetermined mode of operation is a test mode to be performed during factory testing of the wafer.

8. The chip of claim 2 or any of claims 3 to 7 when dependent on claim 2, wherein the first sawbow line and the second sawbow line are arranged in a predetermined pattern between inputs/outputs of the chip and the other chip when in the uncut state.

9. The chip of claim 8, wherein the first sawbow line and the second sawbow line are configured to extend in different directions in the predetermined pattern when in the uncut state.

10. The chip of claim 9, wherein the first sawbow line and the sawbow line cross one another when in the uncut state.

11. The chip of any preceding claim, further comprising;
a portion of a ground line in a cut state,
wherein the portion of the ground line is configured to be coupled to another chip when the ground line is in an uncut state.
